# EUROPEAN PATENT SPECIFICATION

(11) **EP 3 722 129 B1**
(45) Date of publication and mention of the grant of the patent: **07.06.2023**
(21) Application number: 18886618.0
(22) Date of filing: 05.12.2018
(51) Int. Cl.: B60K 1/04, H01F 7/02, B60L 53/80, B66C 1/04, B66C 1/06, H01M 50/20, B60L 50/64, B60L 50/60, H01F 7/04, H01M 50/244, H01M 50/249

(54) **VEHICLE COMPRISING A BATTERY PACK**
KRAFTFAHRZEUG MIT EINER BATTERIEPACKUNG
VÉHICULE AVEC UN BLOC DE BATTERIES

(30) Priority: 06.12.2017 CN 201711278452
(43) Date of publication of application: 14.10.2020
(73) Proprietor: NIO (Anhui) Holding Co., Ltd., Hefei City, Anhui Province (CN)
(72) Inventor: GONG, Hongbing, Shanghai 201804 (CN); YANG, Lei, Shanghai 201804 (CN); DING, Yazhou, Shanghai 201804 (CN)
(74) Representative: Patentanwaltskanzlei WILHELM & BECK
(86) International application number: PCT/CN2018/119352
(87) International publication number: WO 2019/109946

(56) References cited:
- CN-A- 106 553 514
- CN-A- 106 601 934
- CN-U- 203 529 700
- CN-U- 205 335 025
- CN-U- 206 306 812
- CN-U- 206 306 812
- CN-U- 206 647 703
- CN-U- 206 647 703
- CN-U- 207 535 678
- US-B1- 9 643 656

## Description

### Technical Field

The invention relates to a **vehicle**, and in particular to a vehicle comprising a battery pack mounted therein and a vehicle body component.

### Background Art

In existing electric vehicles, a battery is mounted on a whole vehicle through multiple bolts. When the battery is mounted or detached, it is necessary to mount or detach the multiple bolts. Not only is the workload heavy, but when the battery is in an emergency condition, the whole vehicle cannot be quickly separated from the battery, which is likely to cause danger to the vehicle and a person therein.

CN 206 306 812 U discloses a drawer type mounting and replacement structure for a battery of an electric vehicle. A mounting port provided at the right end of a battery compartment is located on the side wall of the body of the electric vehicle. The battery compartment has fixed sliding rails arranged on both side walls thereof. Corresponding movable sliding rails are arranged on both side walls of a battery frame. The battery frame has a cavity therein for accommodating the battery, and is mounted in the battery compartment. The battery compartment has a transverse groove on the left end, in which a return spring is mounted. An electromagnet is arranged between the left end of the battery compartment and the left end of the battery frame, which is connected with the return spring. A first switch button for controlling the electromagnet is mounted on the side wall of the left end of the battery compartment. A second switch button for controlling the electromagnet is provided at the mounting port. Iron sheets are provided on both the side wall of the left end of the battery compartment and the side wall of the left end of the battery frame. When the electromagnet is energized, it generates magnetism to attract the battery compartment and the battery frame, so that the battery frame is more secure in the battery compartment. The magnetism of the battery will disappear when the power is off, and the return spring is extended to push the right end of the battery frame to slide out of the battery compartment, which is convenient for battery replacement.

US 9 643 656 B 1 discloses a vehicle energy storage system, which includes an energy storage compartment with an access mechanism. Safety mechanisms are provided that ensure energy cartridges are properly installed in the compartment, that the access mechanism properly closes, and that notify a user when the cartridges are improperly installed and/or are faulty.

### Summary of the Invention

An objective of the invention is to overcome problems of existing battery mounting devices, and to provide a vehicle body component, a battery pack, and a vehicle comprising a battery pack mounted therein and a vehicle body component,. The technical problem to be solved is to improve the existing problem of the battery being not easy to mount and detach, such that the battery is more conveniently and rapidly mounted and detached. When the battery has a fault, it can be quickly detached, thereby protecting the vehicle and a person therein against danger.

The following technical solutions are used to achieve the objective of the invention and address the technical problem to be solved.

The invention is set out in the appended set of claims..

By virtue of the above technical solutions, the invention has at least the following advantages and beneficial effects:
(1) the vehicle body component of the invention comprises a magnetic force device, which is switchable between a magnetic state and a non-magnetic state and is able to attract a magnetic object in the magnetic state, thus when a battery pack is mounted to a vehicle body, an attraction force of the magnetic force device can be used to fix the battery pack, and the battery pack can be easily detached in the non-magnetic state, which requires no detachment of bolts and achieves rapid and
(2) the battery pack of the invention is provided with a magnetic object, and during installation, the magnetic object can be attracted on the battery pack, which is convenient and rapid; (3) the vehicle having a battery mounted therein according to the invention comprises a battery pack provided with a magnetic object, and a magnetic force device, and the magnetic force device can attract the magnetic object in the magnetic state to fix the battery pack, and can easily detach the battery pack in the non-magnetic state, which requires no detachment of bolts and achieves rapid and convenient installation;
(4) in the vehicle having a battery mounted therein according to the invention, the magnets used in the magnetic force device are Nd₂-Fe-14B permanent magnets, which have strong magnetism and light weight, making the battery pack firmly mounted and reducing the weight of the whole vehicle; and
(5) in the vehicle having a battery mounted therein according to the invention, a mounting and positioning device is disposed between the magnetic force device and a ferromagnetic object, and during installation, only a positioning protrusion needs to be placed in the mounting and positioning groove, which is convenient and rapid and can also prevent misalignment between the battery pack and the magnetic force device.

The aforementioned description is only an overview of the technical solutions of the invention, which is defined by the subject-matter of the independent claim 1, while the potential embodiments form the subject-matter of the dependent claims. In order to clearly understand the technical means of the invention, the invention can be implemented according to the contents of the description; and in order to make the aforementioned and other objects, features and advantages of the invention more obvious and understandable, preferred embodiments are described in detail below with reference to the accompanying drawings.

### Brief Description of the Drawings

Fig. 1 is a structural schematic diagram of a vehicle having a battery mounted therein according to the invention.
Fig. 2 is a first schematic diagram of a magnetic force device in the vehicle having a battery mounted therein according to the invention.
Fig. 3 is a second schematic diagram of the magnetic force device in the vehicle having a battery mounted therein according to the invention.

**[Description of Symbols]**

| | |
|---|---|
| 10: Battery pack | 20: Magnetic force device |
| 11: Mounting block | 21: Magnet |
| 12: Positioning protrusion | 22: Magnet |
| 30: Right body longitudinal rail | 23: Non-magnetizer |
| 24: Electric motor | |

### Detailed Description of Embodiments

In order to further illustrate the technical means used to achieve the intended purpose of the invention and the technical effects of the invention, the implementation of a device for quick swap of a vehicle battery proposed in the invention and the features and effects thereof are described in detail hereinafter in conjunction with the accompanying drawings and the preferred embodiments.

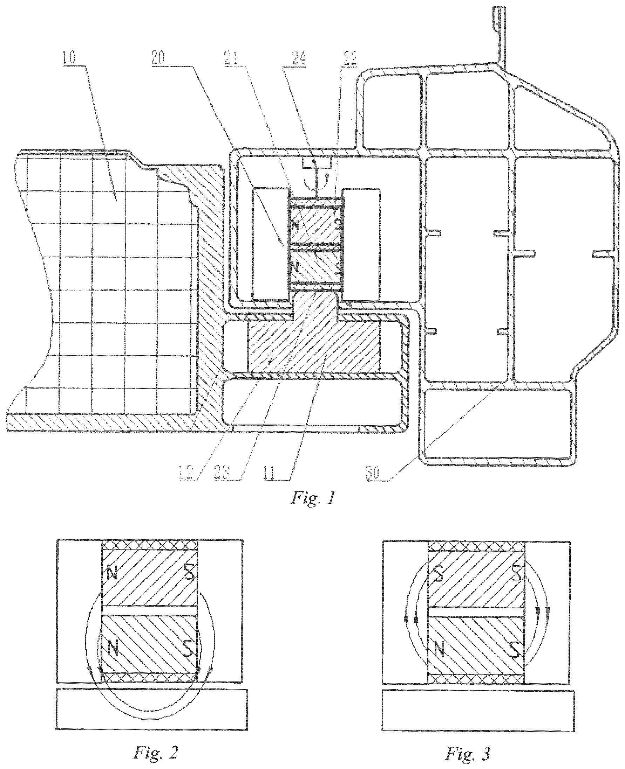

Referring to Fig. 1, a vehicle having a battery mounted therein according to the invention comprises a battery pack 10 provided with a magnetic object, and a magnetic force device 20, which is fixed to a vehicle body component, specifically a right body longitudinal rail, and may also be fixed to any component where the battery is to be installed. The magnetic force device 20 has two states. In a first state, the magnetic force device has magnetism and can attract the magnetic object such that the battery pack 10 is relatively fixed in position to the vehicle body component. In a second state, the magnetic force device has no magnetism and has no attraction force to the magnetic object, and the battery pack 10 can be separated from the vehicle body component.

According to the invention, the magnetic force device 20 comprises two groups of magnets 21, 22, the magnitudes of the magnetic forces of the two groups of magnets 21, 22 are the same, the two groups of magnets 21, 22 are placed side by side, and one group of magnets is rotatable by 180°. Referring to Fig. 2, when magnetic poles of upper and lower magnets are in the same direction, the magnetic force device 20 is in a loaded state, has magnetism, and can attract the magnetic object. If one group of magnets rotates by 180°, referring to Fig. 3, the magnetic poles of the upper and lower magnets have opposite directions, the magnetic force device 20 is in an unloaded state, the magnetism disappears, and there is no attraction force between the magnetic force device and the magnetic object. Specifically, each of the two groups of magnets 21, 22 is a single sufficiently large magnet, and the magnetic forces of the two magnets are the same. As an alternative, the two groups of magnets 21, 22 are formed by a plurality of magnets, the magnetic forces of the two groups of magnets are the same, the two groups of magnets 21, 22 are Nd₂-Fe-14B permanent magnets, the rotatable magnets are driven by an electric motor 24, and the electric motor 24 is mounted to the right body longitudinal rail. The electric motor 24 is a magnetic force control electric motor, i.e. an ordinary DC electric motor, the purpose of using the magnetic force control electric motor is to use the rotational motion of a motor shaft to control and achieve the presence or absence of the magnetic force of the magnetic force device, which is similar to a switching action. As an alternative, the electric motor 24 uses another ordinary electric motor. The Nd₂-Fe-14B permanent magnet has strong magnetism and light weight, and the attraction force of the whole magnetic force device 20 reaches 400 kgf, which makes the battery pack 10 firmly fixed to the vehicle body component, and reduces the weight of the whole vehicle.

In an embodiment, the magnetic object is a mounting block 11 welded and fixed to the battery pack 10, and the mounting block 11 is made of a ferromagnetic material. As an alternative, the mounting block 11 is made of another magnetic material, and the magnetic force device 20 fixes the battery pack 10 by means of attracting the mounting block 11. As an alternative, the magnetic object is a magnetic component on a shell of the battery pack 10.

In an embodiment, a mounting and positioning device is disposed between the magnetic force device 20 and the magnetic object. Specifically, the mounting and positioning device comprises a mounting and positioning groove disposed on the magnetic force device 20, and a positioning protrusion 12 disposed on the mounting block 11. The positioning protrusion 12 matches the mounting and positioning groove, and the positioning protrusion 12 is placed in the mounting and positioning groove. When the battery pack is mounted, only the positioning protrusion 12 needs to be placed in the mounting and positioning groove, which is convenient and rapid and can also prevent misalignment between the battery pack 10 and the magnetic force device 20.

In an embodiment, a non-magnetizer 23 is wrapped around each of the two groups of magnets 21, 22.

In the vehicle having a battery mounted therein according to the invention, when the battery is mounted, the magnetic force device 20 has a magnetic state, and attracts the magnetic object on the battery pack 10 such that the battery pack 10 is relatively fixed in position to the vehicle body component, and when the battery needs to be detached, the electric motor is used to drive one group of magnets to rotate by 180°, the magnetism of the magnetic force device 20 disappears, and the battery pack can be detached.

Referring to Fig. 1, the vehicle body component of the invention comprises a magnetic force device 20. Specifically, the magnetic force device 20 is fixed to the right body longitudinal rail. The magnetic force device 20 has two states. In a first state, the magnetic force device has sufficient magnetism and can attract a magnetic object. In a second state, the magnetic force device has no magnetism and has no attraction force to the magnetic object.

According to the invention, the magnetic force device 20 comprises two groups of magnets 21, 22, the magnitudes of the magnetic forces of the two groups of magnets 21, 22 are the same, the two groups of magnets 21, 22 are placed side by side, and one group of magnets is rotatable by 180°. Referring to Fig. 2, when magnetic poles of upper and lower magnets are in the same direction, the magnetic force device 20 is in a loaded state, has magnetism, and can attract the magnetic object. If one group of magnets rotates by 180°, referring to Fig. 3, the magnetic poles of the upper and lower magnets have opposite directions, the magnetic force device 20 is in an unloaded state, the magnetism disappears, and there is no attraction force between the magnetic force device and the magnetic object. Specifically, each of the two groups of magnets 21, 22 is a single sufficiently large magnet, and the magnetic forces of the two magnets are the same. As an alternative, the two groups of magnets 21, 22 are formed by a plurality of magnets, the magnetic forces of the two groups of magnets are the same, and the two groups of magnets 21, 22 are Nd₂-Fe-14B permanent magnets. The rotatable magnets are driven by an electric motor 24, the electric motor 24 is mounted to the right body longitudinal rail, and the electric motor 24 is a magnetic force control electric motor. As an alternative, the electric motor 24 uses another ordinary electric motor. The Nd₂-Fe-14B permanent magnet has strong magnetism and light weight, and the attraction force of the whole magnetic force device 20 reaches 400 kgf, which can firmly attract the battery pack, and reduces the weight of the whole vehicle.

In an embodiment, a mounting and positioning device is disposed between the magnetic force device 20 and the magnetic object. Specifically, the mounting and positioning device comprises a mounting and positioning groove disposed on the magnetic force device 20, and a positioning protrusion 12 disposed on the mounting block 11. The positioning protrusion 12 matches the mounting and positioning groove, and the positioning protrusion 12 is placed in the mounting and positioning groove. When the battery pack is mounted, only the positioning protrusion 12 needs to be placed in the mounting and positioning groove, which is convenient and rapid and can also prevent misalignment between the battery pack 10 and the magnetic force device 20.

In an embodiment, a non-magnetizer 23 is wrapped around each of the two groups of magnets 21, 22.

Referring to Fig. 1, a battery pack 10 of the invention is provided with a magnetic object, which is a mounting block 11 welded and fixed to the battery pack 10, and the mounting block 11 is made of a ferromagnetic material. As an alternative, the mounting block 11 is made of another magnetic material, and the magnetic force device 20 fixes the battery pack 10 by means of attracting the mounting block 11. As an alternative, the magnetic object is a magnetic component on a shell of the battery pack 10.

In an embodiment, the mounting block 11 is provided with a positioning protrusion 12 which matches a mounting and positioning groove on a magnetic force device 20.

According to the invention, also comprised is the magnetic force device 20, which is switchable between a magnetic state and a non-magnetic state and is able to attract a magnetic object on the battery pack 10 in the magnetic state. The magnetic force device 20 is mounted to the vehicle body or another component and can fix the battery pack.

The foregoing descriptions are merely preferred embodiments of the invention, and are not intended to limit the invention in any form. The invention is limited only by the scope of the appended claims. Those skilled in the art can make alterations or modifications to the technical contents disclosed above without departing from the scope of the invention as defined by the appended claims.

## Claims

1. A vehicle comprising a battery pack mounted therein and a vehicle body component, the vehicle body component comprising
a magnetic force device (20), the magnetic force device (20) being switchable between a magnetic state and a non-magnetic state, and being able to attract a magnetic object in the magnetic state,
the battery pack having the magnetic object, the magnetic object being adapted for being attracted by the magnetic force device (20) in the magnetic state;
**characterized in that**:
the magnetic force device (20) comprises two groups of magnets (21, 22), the magnitudes of the magnetic forces of the two groups of magnets (21, 22) are the same, the two groups of magnets (21, 22) are placed side by side, and one group of magnets is rotatable by 180° such that the magnetic force device (20) switches into the magnetic state or the non-magnetic state.

2. The vehicle according to claim 1, wherein each of the magnets (21, 22) is an Nd2-Fe-14B permanent magnet.

3. The vehicle according to claim 1, wherein the rotatable magnet is driven by an electric motor (24), which is disposed on the vehicle body component.

4. The vehicle according to claim 1, wherein the magnetic force device (20) is provided with a mounting and positioning groove matching a positioning protrusion (12) on a battery pack (10).

5. The vehicle according to claim 1, wherein the magnetic object is a mounting block (11) fixed to the battery pack (10).

6. The vehicle according to claim 1, wherein a mounting and positioning device is disposed between the magnetic force device (20) and the magnetic object, and the mounting and positioning device comprises:
the mounting and positioning groove disposed on the magnetic force device (20), and
a positioning protrusion (12) disposed on the mounting block (11), the positioning protrusion (12) being placed in the mounting and positioning groove.

7. The vehicle according to claim 1, wherein a non-magnetizer (23) is wrapped around each of the two groups of magnets (21, 22).

## Patentansprüche

1. Fahrzeug mit einer darin montierten Batteriepackung und einer Fahrzeugkarosseriekomponente,
wobei die Fahrzeugkarosseriekomponente eine Magnetkraftvorrichtung (20) umfasst, wobei die Magnetkraftvorrichtung (20) zwischen einem magnetischen Zustand und einem nichtmagnetischen Zustand schaltbar ist und im magnetischen Zustand in der Lage ist, ein magnetisches Objekt anzuziehen, wobei die Batteriepackung das magnetische Objekt aufweist, das magnetische Objekt eingerichtet ist, um im magnetischen Zustand durch die Magnetkraftvorrichtung (20) angezogen zu werden;
**dadurch gekennzeichnet, dass**:
die Magnetkraftvorrichtung (20) zwei Gruppen von Magneten (21, 22) umfasst, wobei die Größen der Magnetkräfte der beiden Gruppen der Magnete (21, 22) gleich sind, die beiden Gruppen der Magnete (21, 22) nebeneinander platziert sind, und eine Gruppe von Magneten um 180° rotierbar ist, so dass die Magnetkraftvorrichtung (20) in den magnetischen Zustand oder den nichtmagnetischen Zustand geschaltet wird.

2. Fahrzeug nach Anspruch 1, wobei jeder der Magnete (21, 22) ein Nd2-Fe-14B-Permanentmagnet ist.

3. Fahrzeug nach Anspruch 1, wobei der rotierbare Magnet durch einen Elektromotor (24) angetrieben wird, der auf der Fahrzeugkarosseriekomponente angeordnet ist.

4. Fahrzeug nach Anspruch 1, wobei die Magnetkraftvorrichtung (20) mit einer Montage- und Positioniernut ausgestattet ist, die zu einem Positioniervorsprung (12) auf einer Batteriepackung (10) passt.

5. Fahrzeug nach Anspruch 1, wobei das magnetische Objekt ein Montageblock (11) ist, der an der Batteriepackung (10) fixiert ist.

6. Fahrzeug nach Anspruch 1, wobei eine Montage- und Positioniervorrichtung zwischen der Magnetkraftvorrichtung (20) und dem magnetischen Objekt angeordnet ist und die Montage- und Positioniervorrichtung umfasst:
die Montage- und Positioniernut, die auf der Magnetkraftvorrichtung (20) angeordnet ist, und
einen Positioniervorsprung (12), der auf dem Montageblock (11) angeordnet ist, wobei der Positioniervorsprung (12) in der Montage- und Positioniernut platziert wird.

7. Fahrzeug nach Anspruch 1, wobei ein Nichtmagnetisierer (23) um jede der beiden Gruppen von Magneten (21, 22) gewickelt ist.

## Revendications

1. Véhicule comprenant un bloc-batterie monté en son sein et un composant de carrosserie de véhicule,
le composant de carrosserie de véhicule comprenant un dispositif à force magnétique (20), le dispositif à force magnétique (20) étant commutable entre un état magnétique et un état non magnétique, et étant susceptible d'attirer un objet magnétique dans l'état magnétique,
le bloc-batterie comportant l'objet magnétique, l'objet magnétique étant conçu pour être attiré par le dispositif à force magnétique (20) dans l'état magnétique ;
**caractérisé en ce que** :
le dispositif à force magnétique (20) comprend deux groupes d'aimants (21, 22), les intensités des forces magnétiques des deux groupes d'aimants (21, 22) sont les mêmes, les deux groupes d'aimants (21, 22) sont placés côte à côte, et un groupe d'aimants peut être tourné de 180° de telle sorte que le dispositif à force magnétique (20) passe à l'état magnétique ou à l'état non magnétique.

2. Véhicule selon la revendication 1, dans lequel chacun des aimants (21, 22) est un aimant permanent Nd2-Fe-14B.

3. Véhicule selon la revendication 1, dans lequel l'aimant rotatif est entraîné par un moteur électrique (24), qui est disposé sur le composant de carrosserie de véhicule.

4. Véhicule selon la revendication 1, dans lequel le dispositif à force magnétique (20) est pourvu d'une rainure de montage et de positionnement correspondant à une saillie de positionnement (12) sur un bloc-batterie (10).

5. Véhicule selon la revendication 1, dans lequel l'objet magnétique est un bloc de montage (11) fixé au bloc-batterie (10).

6. Véhicule selon la revendication 1, dans lequel un dispositif de montage et de positionnement est disposé entre le dispositif à force magnétique (20) et l'objet magnétique, et le dispositif de montage et de positionnement comprend :
la rainure de montage et de positionnement disposée sur le dispositif à force magnétique (20), et
une saillie de positionnement (12) disposée sur le bloc de montage (11), la saillie de positionnement (12) étant placée dans la rainure de montage et de positionnement.

7. Véhicule selon la revendication 1, dans lequel un élément non magnétisant (23) est enroulé autour de chacun des deux groupes d'aimants (21, 22).
